# EUROPEAN PATENT SPECIFICATION

(11) **EP 0 471 960 B1**
(45) Date of publication and mention of the grant of the patent: **20.09.1995**
(21) Application number: 91111167.2
(22) Date of filing: 04.07.1991
(51) Int. Cl.: C08G 81/00, C08G 69/40

(54) **Process for the preparation of Block copolyetheramides suitable for injection moulding**
Verfahren zur Herstellung von Polyätheramideblockpolymere für Spritzguss
Procédé pour la préparation de copolyétheramides séquencés pour moulage par injection

(30) Priority: 05.07.1990 IT 2087390
(43) Date of publication of application: 26.02.1992
(73) Proprietor: ENICHEM S.p.A., 20124 Milano (IT)
(72) Inventor: Ciaperoni, Aldemaro, I-20021 Bollate, Milano (IT)
(74) Representative: Barz, Peter, Dr.

(56) References cited:
- EP-A- 0 156 035
- FR-A- 2 470 141
- CRC Handbook of Chemistry and Physics; 73rd Edition; Editor D.R. Lide; CRC Press; Boca Raton; page 4-82

## Description

The present invention relates to a process for preparing block copolyetheramides suitable for injection moulding.

As is known, injection moulding is a common and conventional technique for transforming a thermoplastic polymeric material into shaped bodies by causing the material in the molten state to flow into a mould.

The main requirement which a thermoplastic material has to meet for said application is a high fluidity in the molten state, since a high flowability permits a fast, perfect and complete filling of the moulds, particularly in the case of very thin formed articles and of complex shapes.

It is known that the flowability of a material can be enhanced by increasing the moulding temperature but, generally, the temperature increase involves a degradation of the material and, as a result thereof, undesired colour changes of the moulded article.

In order to provide thermoplastic polymeric material having a fluidity in the molten state which is suitable for injection moulding, it is not only necessary to control the molecular weight thereof (also in view of its physicomechanical properties) but also, and mainly, to keep it free from cross-linking and/or chemical structures capable of giving rise to cross-linking under the action of heat, and/or from ionic and/or aromatic structures. When aromatic structures are present, either alone or in combination with ionic groups, the temperatures necessary for moulding are relatively high, owing to phenomena which hinder flowing in the molten state. Furthermore, the presence of ionic groups leads to the formation of polar groups or cross-linked structures or, in general, to intermolecular associations (see Enc. Scienza e Tecnologia dei Polimeri, Ed. Mark, Vol. 12, Page 76), which impart a relatively high rigidity to the material, wherefore it is necessary to operate at higher temperatures.

Said situation is aggravated when the polymer to be moulded consists of polyamides or copolyamides, in which the presence of polar -CONH- groups involves strong interactions with other polar groups of ionic nature, with formation of intermolecular bonds, which adversely affect the fluidity of said materials at elevated temperatures.

This phenomenon is particularly significant in the case of copolyetheramides having a block structure in the sense that polymeric segments of polyamides alternate, in a random or ordered manner, with polyalkylene ether segments. Therefore, also in the case of copolyetheramides, it is necessary to raise their fluidity in the molten state in order to render them suitable for injection moulding, rotational moulding, blast moulding, extrusion moulding, etc.

Block copolyetheramides are well-known and broadly described in the patent literature, and they are utilized for the manufacture of fibres, as described in FR-A-1550292, GB-A-1062547, GB-A-793451, US-A-3044987 and EP-A-156035, and in the field of plastics, as described in GB-A-1270097 and US-A-3522329 and 4346200.

Block copolyetheramides can be prepared either by reacting preformed polyamide blocks with polyalkylene ethers containing hydroxyl end groups, in the molten state in a hot mixing unit, or by causing the polyamide-forming monomers to polymerize in the presence of a polyalkylene ether containing hydroxyl end groups; or, also, by first preparing the polyamide blocks and by adding, upon conclusion of the polymerization, the polyalkylene blocks containing the hydroxyl end groups as described, for example, in US-A-4873296.

Polyalkylene ethers containing amino end groups, as partial or total substitute for the hydroxyl groups, can be utilized as well.

In particular, it is preferable to first prepare a polyamide such as, for example, polycaprolactam, terminated with carboxylic groups, and then to esterify the carboxylic groups with the polyalkylene ether hydroxy groups. As is known, the esterification of the free carboxylic end groups of the polyamide with the hydroxy groups of the polyalkylene ether occurs in the molten state, generally at temperatures higher than 220°C, under vacuum and, preferably, in the presence of catalytic amounts of organic titanium compounds (see Europ. Poly. Sc. 13, 353, 1977 and US-A-4873296) as esterification catalysts.

However, the organic titanium compounds exhibit the drawback of producing cross-linked structures and of imparting an undesired yellowing to the polymer.

It is also known to prepare polyamides in the presence of one or more mono- or poly-functional acids. Said acids react with the free amino groups of the polyamide, thereby partially or fully stopping - depending on the amount added - the condensation reaction between the amino groups and the carboxylic groups of said polyamide.

Suitable acids proposed for this purpose are acetic, adipic, sebacic, citric and trimesic acid and the like. Also, the phosphorus acids such as phosphoric, phosphorous and phosphonic acids have been suggested to this end. However, the phosphorus acids and, in general, the polyfunctional acids, are affected by the drawback of forming cross-linked structures, particularly when they are utilized at temperatures higher than 220°C. Furthermore, the formation of cross-linked structures is favoured by the presence of phosphorus-amide derivatives of acidic nature according to the scheme: 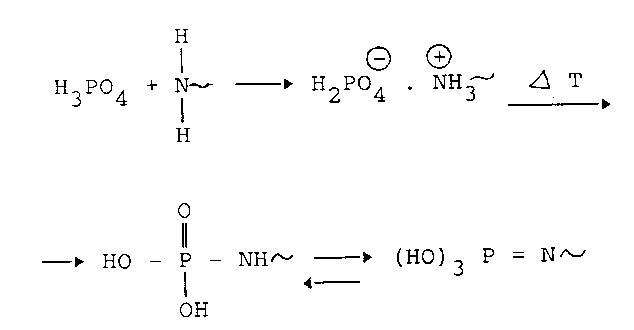
Furthermore, the acidity of phosphoramides catalyzes the degradation reactions of the polyalkylene ethers, particularly at high temperatures, resulting in an impairment of the chemico-physical and rheological properties of the corresponding copolyetheramides.

According to the present invention, all the problems associated with the low fluidity of copolyetheramides in the molten state can be solved and block copolyetheramides suitable for injection moulding can be obtained by operating under the following conditions:
a) carrying out the polymerization (polycondensation) of the polyamide forming monomer(s) in the presence of catalytic amounts of hypophosphorous and/or metahypophosphorous acid;
b) carrying out the polymerization of the polyamideforming monomer(s) in the complete absence of polyalkylene ethers; and
c) carrying out the polycondensation of the carboxylic end groups of the polyamide and the hydroxy and/or amino groups of the polyalkylene ethers in the absence of any additional polycondensation catalyst and under a vacuum lower than 100 mm Hg (13,332 Pa) at temperatures higher than the polyamide melting temperature.

Thus, the present invention provides a process for the preparation of block copolyetheramides having a melting point ranging from 215 to 223°C, an apparent viscosity, at 230°C, ranging from 50 to 150 Pa·s, a number average molecular weight ranging from 4300 (preferably 10000) to 50000 and a degree of yellowing lower than or equal to 20, measured by means of an Elrepho apparatus. Said process comprises carrying out the polymerization of the polyamide forming monomer(s) in the presence of catalytic amounts of hypophosphorous and/or meta-hypophosphorous acid, in the complete absence of polyalkylene ether, and by subsequently polycondensing the acidic end groups of the polyamide with the hydroxy and/or amino end groups of the polyalkylene ether, in the absence of additional polycondensation catalysts and under a vacuum lower than 100 mm Hg (13,332 Pa), at temperatures higher than the polyamide melting temperature.

The present invention further provides a process for the preparation of moulded articles in which process the block - copolyetheramides are formed into moulded articles in an additional process step.

The block copolyetheramides prepared according to the process of the present invention essentially comprise two types of blocks or segments, one of which is a polyamide block and the other is a polyalkylene ether block, said blocks being chemically bound to each other and distributed in a random or ordered fashion along the polymeric chain.

In said block copolyetheramides the polyamide blocks preferably have a number average molecular weight of from 2000 to 20000, particularly from 4000 to 16000, and the polyalkylene ether blocks preferably have a number average molecular weight ranging from 160 to 10000, particularly from 300 to 4000.

Preferably, the block copolyetheramides have a number average molecular weight ranging from 15000 to 30000.

The concentration of the polyalkylene ether in the block copolyetheramides usually ranges from 0.5 to 30% by weight and, preferably, is from 1 to 15% by weight.

The chemical bonds between the polyamide blocks and the polyalkylene ether blocks usually are of the ester type and, therefore, derive from the reaction of the carboxylic acid end groups of the polyamide blocks with the terminal hydroxy groups of the polyalkylene ether. Said bonds can also be of the amide type, namely deriving from the reaction of the carboxylic acid end groups of the polyamide blocks with the amino end groups of the polyalkylene ether, in case such a type of polyalkylene ether is utilized (alone or in combination with the hydroxy group-terminated polyalkylene ether).

The hypophosphorous and/or meta-hypophosphorous acid which is utilized in catalytic amounts in the preparation of the polyamide not only acts as polymerization catalyst but also as molecular weight regulator. In fact, it binds to the amino end groups of the polyamide, thereby preventing the latter from reacting with the acidic groups of the polyamide blocks or of the polyalkylene oxide blocks.

The amount of hypophosphorous and/or meta-hypophosphorous acid which is added to the polymerization medium usually ranges from 0.01 to 50 mols/ton of monomer, in particular, from 0.05 to 20 mols/ton of monomer and, most preferably, from 0.1 to 5 mols/ton of monomer.

The monomers utilized for preparing the polyamide blocks are the conventional ones and comprise the mono-amino-monocarboxylic acids containing at least 2 (and usually not more than 20) carbon atoms between the amino group and the carboxylic acid group; the lactams; or a substantially equimolar mixture of an alkylene diamine containing at least two carbon atoms between the amino groups and an aliphatic dicarboxylic acid, for example, an equimolar mixture of hexamethylene diamine and adipic acid, salified in water according to known methods.

Particularly preferred monomers for use in the present invention are the lactams of general formula (I): 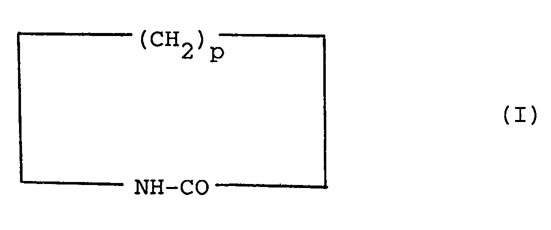
wherein p is an integer of from 2 to 11.

Specific examples of lactams of general formula (I) (which can be employed alone or as mixture of two or more thereof) are beta-propiolactam, gamma-butyrolactam, delta-valerolactam, epsilon-caprolactam, enantolactam, omega-lauryl-lactam, caprilactam, etc. epsilon-Caprolactam is particularly preferred for the purposes of the present invention.

The polyalkylene ethers containing terminal hydroxy and/or amino groups and being suitable for the process of the present invention include compounds of general formula (II):

X - R₁ - (OR₂)ₙ - OR₃ - X₁ (II)

wherein:
R₁, R₂ and R₃, the same or different from each other, represent saturated aliphatic divalent radicals having a straight or branched chain, and containing from 1 to 10 carbon atoms;
X and X₁, the same or different from each other, represent -OH or -NH₂, and
n is an integer such as to impart a molecular weight of from 160 to 10000 to the corresponding block.

Specific examples of polyalkylene ethers of formula (II) are poly(ethylene oxide) glycol, poly(1,2-propylene oxide)glycol, poly(1,3-propylene oxide)glycol, poly(tetramethylene oxide)glycol, poly(pentamethylene oxide)glycol, poly(hexamethylene oxide)glycol, poly(heptamethylene oxide)glycol, poly(octamethylene oxide)glycol, poly(nonamethylene oxide)glycol, poly(decamethylene oxide)glycol and poly(1,2-butylene oxide)glycol; random or block copolymers of ethylene oxide and 1,2-propylene oxide, etc.

Poly(ethylene oxide)glycol and/or poly(tetramethylene oxide)glycol are particularly preferred in the present invention.

The process of the present invention essentially comprises the polymerization of the monomers forming the polyamide by means of any known polymerization technique in the presence of catalytic amounts of hypophosphorous and/or meta-hypophosphorous acid to obtain polyamide blocks (A) having a molecular weight in the above-indicated ranges and, subsequently, reacting the polyamide blocks so obtained with polyalkylene ether blocks (B) containing terminal hydroxy and/or amino groups, in stoichiometric ratios thereof, being selected in such a manner as to obtain copolyetheramides having ordered or random blocks. The condensation reaction between the polyamide blocks and the polyalkylene ether blocks is carried out in the absence of any additional polycondensation catalysts, under a vacuum lower than 100 mm Hg (13332 Pa) and at temperatures higher than the polyamide block melting temperature. The polycondensation temperatures generally range from 210 to 275°C.

The lactam polymerization is preferably conducted in the presence of water, in an amount ranging from 1 to 10, preferably 2 to 5% by weight, calculated on the lactam.

The polymerization cycle of the lactam or of aqueous solutions of diamine-diacid salts usually comprises heating the reaction mixture above 200°C under an autogenous pressure of 1 to 15 atm., and then gradually reducing the pressure until reaching atmospheric pressure; the polycondensation time usually ranges from 90 minutes to 3 hours.

The polyalkylene ether containing hydroxy (and/or amino) end groups is added in a nitrogen stream or under a slight vacuum to the polyamide thus produced. The amount of polyalkylene ether added depends on the desired type of copolyetheramide and, in particular, on the desired properties thereof.

The esterification (amidation) reaction between the acidic groups of the polyamide and the hydroxy (amino) groups of the polyalkylene ether takes place under a vacuum lower than 100 mm Hg (13332 Pa) and at temperatures higher than the polyamide melting temperature and, according to the present invention, in the absence of esterification (amidation) catalysts.

In fact, it has surprisingly been found that the esterification (amidation) reaction is considerably accelerated when a polyamide is utilized which has been obtained by carrying out the polymerization of the lactam(s) or the polyamide-forming monomer(s) in the presence of hypophosphorous and/or meta-hypophosphorous acid.

The use of vacuum (lower than 13332 Pa (100 mm Hg)) in the condensation process between the polyamide and the polyether allows elimination of the monomer (e.g., the lactam) during this procedure and, thereby, the following advantages are achieved:
- The washing and drying steps are avoided;
- The possibility of rinsing the lactam distilled in the successive polymerization steps;
- Ecological advantages due to the absence of draining the waste water.

As mentioned above, the copolyetheramides prepared according to the present invention may be advantageously utilized in injection moulding for the production of moulded articles endowed with a high impact resistance and excellent physicomechanical properties. Thanks to said characteristics, said copolyetheramides may be used in the automotive, electronic and technical fields in the form of cases, cups, boxes, containers, panels, sheets, plates, films, rods, and the like. Furthermore, said copolyetheramides can be mixed with other polymers in order to impart them with particular processability properties and, also, with various additives such as stabilizers, antiflame agents, dyes, pigments, filling agents, organic and inorganic fillers, which are generally utilized in the manufacture of shaped bodies.

The invention is further described by the following examples, which serve to illustrate the invention and do not limit it in any way.

The methods employed for determining the characteristics of the block copolyetheramides were as follows:

### Molecular weight

The number average molecular weight of the polyamide was determined by titration of the carboxylic end groups after the polyamide had been extracted with water and dried.

The number average molecular weight of the polyalkylene ether was determined by titration of the hydroxy (and/or optionally amino) end groups.

The number average molecular weight (Mn) of the copolyetheramide was determined through the relationship: 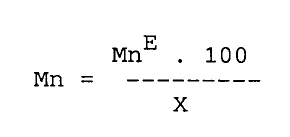
wherein:
Mn^{E} is the number average molecular weight of the polyalkylene ether; and
X is the amount of polyalkylene ether (in % by weight) contained in the copolyetheramide. X was determined by titration of the iodine released owing to the disaggregation of the copolyetheramide with hydriodic acid, after treatment of the copolyetheramide with boiling water for eight hours and drying.

### Melting point

The melting point was determined by differential thermal analysis under nitrogen, with a scanning of 10°C/minute, using a dried polymer having a residual water content of 0.04 to 0.05% by weight.

### Apparent viscosity

The apparent viscosity was measured at 230°C, at a shear rate of 10 sec.⁻¹ Pa.s, using a Brabender^{(R)} Rheometer with a capillary tube having a length of 50 mm and a diameter of 0.5 mm.

### Degree of yellowing

The yellowing degree was measured by means of an Elrepho^{(R)} apparatus at room temperature.

### EXAMPLE 1

Into a 5-liter stainless steel autoclave, equipped with a stirrer and, at the bottom, an extrusion valve, 45.6 parts of hypophosphorous acid, 50 parts of water and 1000 parts of caprolactam (CPL) were introduced. The resulting mixture was heated in a nitrogen atmosphere to 240°C and maintained at this temperature for 3 hours, not allowing the pressure to exceed 4 bar. These conditions were maintained for a further hour. Then the pressure was brought back to atmospheric pressure within 90 minutes.

The number average molecular weight of the polycaprolactam obtained was 9410.

Upon conclusion of the operation, 100 parts of poly(oxyethylene)glycol, heated to 63°C and having an average molecular weight equal to 2000 were introduced into the autoclave from a container maintained under a nitrogen atmosphere.

The mixture was maintained under stirring by continuously reducing the pressure until, within 5 hours at a temperature of 250°C, a residual pressure of 50 Pa was reached.

At the end, the resulting copolyetheramide was extruded from the autoclave by means of a nitrogen pressure of 12 bar. The resulting block copolyetheramide exhibited the following properties:

| | |
|---|---|
| Melting point | 219.8°C |
| Number average molecular weight | 21040 |
| Poly(oxyethylene)glycol | 9.3% by weight |
| Yellowing degree | 7 |
| Apparent viscosity | 127 Pa.s |

### EXAMPLE 2

The procedure of example 1 was followed, polymerizing 1000 parts of caprolactam in the presence of 23 parts of hypophosphorous acid and 50 parts of water. Upon conclusion of the polymerization reaction, the number average molecular weight of the polycaprolactam was 13010.

90 parts of poly(oxybutylene)glycol, having a number average molecular weight of 3060, were fed into the autoclave and the operation was continued according to example 1. The block copolyetheramide obtained exhibited the following characteristics:

| | |
|---|---|
| Melting point | 215.8°C |
| Number average molecular weight | 16085 |
| Poly(oxybutylene)glycol concentration | 12.1% by weight |
| Yellowing degree | 3 |
| Apparent viscosity | 72 Pa.s |

## Claims

1. Process for the preparation of block copolyetheramides suitable for injection moulding, having a melting point of from 215 to 223°C, an apparent viscosity, at 230°C, of from 50 to 150 Pa.s, a number average molecular weight of from 4300 to 50000 and a degree of yellowing not higher than 20, said copolyetheramides comprising polyamide and polyalkylene ether blocks chemically bound to each other, the process comprising, in succession, the steps of:
- polymerizing the monomer(s) forming the polyamide in the presence of catalytic amounts of hypophosphorous and/or meta-hypophosphorous acid;
- polycondensing the resulting polyamide with a polyalkylene ether with terminal hydroxy and/or amino groups in the absence of additional polycondensation catalyst, under a vacuum lower than 100 mm Hg (13332 Pa) and at temperatures higher than the melting temperature of the polyamide.

2. Process according to claim 1, wherein the polyamide blocks have a number average molecular weight of from 2000 to 20000, and the polyalkylene ether blocks have a number average molecular weight of from 160 to 10000.

3. Process according to any one of claims 1 and 2, wherein the copolyetheramides produced have a number average molecular weight ranging from 15000 to 30000.

4. Process according to any one of the preceding claims, wherein the polyalkylene ether concentration in the copolyetheramides ranges from 0.5 to 30.

5. Process according to any one of the preceding claims, wherein the polyamide blocks are derived from one or more lactams of general formula (I): 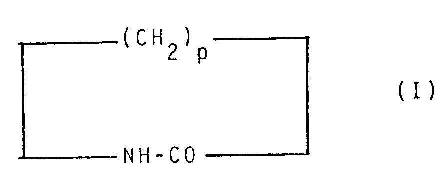 wherein p is an integer ranging from 2 to 11.

6. Process according to any one of the preceding claims, wherein the blocks derived from said polyalkylene ether have the general formula (II):
X - R₁ - (OR₂)ₙ - OR₃ - X₁ (II)
wherein:
R₁, R₂ and R₃, the same or different from each other, represent saturated aliphatic divalent C₁-C₁₀ radicals having a straight or branched chain;
X and X₁, the same or different from each other, represent -O(H) or -NH₍₂₎; and
n is an integer such as to result in a molecular weight of the corresponding block of from 160 to 10000.

7. Process according to any one of the preceding claims, wherein the concentration of hypophosphorous and/or metahypophosphorous acid ranges from 0.01 to 50 mols/ton of monomer.

8. Process according to any one of the preceding claims, wherein the polycondensation is carried out at a temperature of from 210 to 275°C.

9. Process according to any one of the preceeding claims, characterised by that the block-copolyetheramides are formed to moulded articles in an additional process step.

## Patentansprüche

1. Verfahren zur Herstellung von Block-Copolyetheramiden, die sich für den Spritzguß eignen, mit einem Schmelzpunkt von 215 bis 223°C, einer Viskosität bei bestimmtem Geschwindigkeitsgefälle bei 230°C von 50 bis 150 Pa.s, einem Zahlenmittel des Molekulargewichts von 4300 bis 50000 und einem Vergilbungsgrad von nicht höher als 20, wobei die Copolyetheramide chemisch aneinander gebundene Polyamid-und Polyalkylenether-Blöckeumfassen, umfassend die aufeinanderfolgenden Stufen:
- Polymerisation des bzw. der das Polyamid bildenden Monomers bzw. Monomere in Anwesenheit von katalytischen Mengen von unterphosphoriger und/oder metaunterphosphoriger Säure;
- Polykondensation des resultierenden Polyamids mit einem Polyalkylenether mit endständigen Hydroxy- und/oder Aminogruppen in der Abwesenheit von zusätzlichem Polykondensationskatalysator unter einem Vakuum unter 100 mm Hg (13332 Pa) und bei Temperaturen oberhalb der Schmelztemperatur des Polyamids.

2. Verfahren nach Anspruch 1, in dem die Polyamid-Blöcke ein Zahlenmittel des Molekulargewichts von 2000 bis 20000 aufweisen und die Polyalkylenether-Blöcke ein Zahlenmittel des Molekulargewichts von 160 bis 10000 aufweisen.

3. Verfahren nach irgendeinem der Ansprüche 1 und 2, in dem die hergestellten Copolyetheramide ein Zahlenmittel des Molekulargewichts im Bereich von 15000 bis 30000 aufweisen.

4. Verfahren nach irgendeinem der vorangehenden Ansprüche, in dem die Polyalkylenether-Konzentration in den Copolyetheramiden im Bereich von 0,5 bis 30 liegt.

5. Verfahren nach irgendeinem der vorangehenden Ansprüche, in dem die Polyamidblöcke von einem oder mehreren Lactamen der allgemeinen Formel (I) abgeleitet sind: 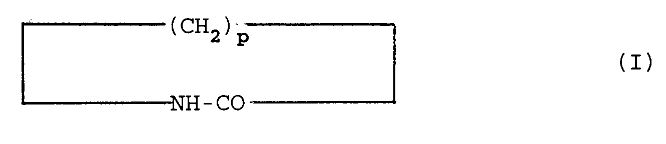 worin p eine ganze Zahl im Bereich von 2 bis 11 ist.

6. Verfahren nach irgendeinem der vorangehenden Ansprüche, in dem die Blöcke, die von dem Polyalkylenether abgeleitet sind, die allgemeine Formel (II) aufweisen:
X - R₁ - (OR₂)ₙ - OR₃ - X₁ (II)
worin:
R₁, R₂ und R₃, gleich oder verschieden voneinander, gesättigte aliphatische zweiwertige C₁-C₁₀-Reste mit einer geraden oder verzweigten Kette darstellen;
X und X₁, gleich oder verschieden voneinander, -O(H) oder -NH₍₂₎ bedeuten; und
n eine solche ganze Zahl ist, die zu einem Molekulargewicht des entsprechenden Blocks von 160 bis 10000 führt.

7. Verfahren nach irgendeinem der vorangehenden Ansprüche, in dem die Konzentration von unterphosphoriger und/oder meta-unterphosphoriger Säure im Bereich von 0,01 bis 50 Mol/Tonne Monomer liegt.

8. Verfahren nach irgendeinem der vorangehenden Ansprüche, in dem die Polykondensation bei einer Temperatur von 210 bis 275°C durchgeführt wird.

9. Verfahren nach irgendeinem der vorangehenden Ansprüche, dadurch gekennzeichnet, daß die Block-Copolyetheramide in einer zusätzlichen Verfahrensstufe zu Formkörpern geformt werden.

## Revendications

1. Procédé de préparation de copolyétheramides séquencés convenant au moulage par injection, ayant un point de fusion de 215 à 223°C, une viscosité apparente de 50 à 150 Pa.s à 230°C, une masse moléculaire moyenne en nombre de 4300 à 50.000 et un degré de jaunissement ne dépassant pas 20, lesdits copolyétheramides comprenant des blocs polyamides et poly(oxyde d'alkylène) chimiquement liés les uns aux autres, le procédé comprenant successivement les étapes consistant à :
- polymériser le ou les monomère(s) formant le polyamide en présence de quantités catalytiques d'acide hypophosphoreux et/ou d'acide méta-hypophosphoreux ;
- effectuer la polycondensation du polyamide résultant avec un poly(oxyde d'alkylène) présentant des groupes terminaux hydroxy et/ou amino, en l'absence de catalyseur de polycondensation supplémentaire, sous un vide correspondant à une pression inférieure à 100 mm Hg (13.332 Pa) et à une température supérieure à la température de fusion du polyamide.

2. Procédé selon la revendication 1, dans lequel les blocs polyamides ont une masse moléculaire moyenne en nombre de 2000 à 20.000, et les blocs poly(oxyde d'alkylène) ont une masse moléculaire moyenne en nombre de 160 à 10.000.

3. Procédé selon la revendication 1 ou 2, dans lequel les copolyétheramides produits présentent une masse moléculaire moyenne en nombre de 15.000 à 30.000.

4. Procédé selon l'une quelconque des revendications précédentes, dans lequel la concentration de poly(oxyde d'alkylène) dans les copolyétheramides est comprise dans l'intervalle allant de 0,5 à 30.

5. Procédé selon l'une quelconque des revendications précédentes, dans lequel les blocs polyamides proviennent d'un ou plusieurs lactames de formule générale (I) : 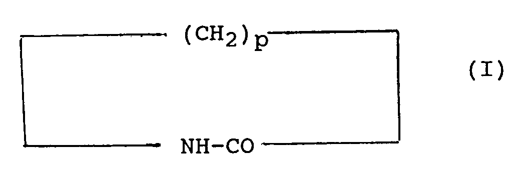 dans laquelle p est un nombre entier, compris dans l'intervalle allant de 2 à 11.

6. Procédé selon l'une quelconque des revendications précédentes, dans lequel les blocs provenant dudit poly(oxyde d'alkylène) répondent à la formule générale (II) :
X - R₁ - (OR₂)ₙ - OR₃ - X₁ (II)
dans laquelle R₁, R₂ et R₃ sont identiques ou différents et représentent chacun un groupe divalent aliphatique saturé en C₁ à C₁₀, à chaîne droite ou ramifiée, X et X₁ sont identiques ou différents et représentent chacun un groupe - OH ou -NH₂, et n est un nombre entier tel que la masse moléculaire du bloc correspondant soit de 160 à 10.000.

7. Procédé selon l'une quelconque des revendications précédentes, dans lequel la concentration de l'acide hypophosphoreux et/ou de l'acide métahypophosphoreux est comprise dans l'intervalle allant de 0,01 à 50 moles par tonne de monomères.

8. Procédé selon l'une quelconque des revendications précédentes, dans lequel on réalise la polycondensation à une température de 210 à 275°C.

9. Procédé selon l'une quelconque des revendications précédentes, **caractérisé** en ce que les copolyétheramides séquencés sont mis sous la forme d'articles moulés dans une étape de procédé supplémentaire.
